**Europäisches Patentamt**

**European Patent Office**

**Office européen des brevets**

(19)

(11) Numéro de publication : **0 188 939**
**B1**

(12) **FASCICULE DE BREVET EUROPÉEN**

(45) Date de publication du fascicule du brevet :
30.11.88

(21) Numéro de dépôt : **85402481.7**

(22) Date de dépôt : **12.12.85**

(51) Int. Cl.⁴ : **B 29 C 47/28**, B 29 C 47/86,
B 29 C 47/02

(54) **Système de gainage d'une âme sensible à la température de fusion du matériau de gainage, procédé de gainage en résultant, application aux poudres et aux fibres plastiques gainées.**

(30) Priorité : **18.12.84 FR 8419366**

(43) Date de publication de la demande :
**30.07.86 Bulletin 86/31**

(45) Mention de la délivrance du brevet :
**30.11.88 Bulletin 88/48**

(84) Etats contractants désignés :
**AT BE CH DE FR GB IT LI LU NL SE**

(56) Documents cités :
**DE-A- 1 527 779**
**FR-A- 2 021 601**
**GB-A- 1 079 551**
**US-A- 3 239 884**
**US-A- 3 773 449**

(73) Titulaire : **ATOCHEM**
**4 & 8, Cours Michelet La Défense 10**
**F-92800 Puteaux (FR)**

(72) Inventeur : **Bourdon, Raymond**
**Domaine du Chateau Lafitte**
**F-64360 Moneim (FR)**
Inventeur : **Kunesch, Paul**
**Quartier Loupien**
**F-64360 Moneim (FR)**
Inventeur : **Cazes, André**
**42, Avenue du Général de Gaulle**
**F-64000 Pau (FR)**

(74) Mandataire : **Foiret, Claude et al**
**ATOCHEM Département Propriété Industrielle**
**F-92091 Paris la Défense 10 Cedex 42 (FR)**

## Description

La présente invention concerne un dispositif de gainage d'une âme, et plus particulièrement d'une poudre et/ou de fibres, sensible à la température de fusion du matériau de gainage, correspondant au préambule de la revendication indépendante 1. Il s'agit plus particulièrement d'une tête d'extrudeuse évitant à l'âme de subir une température trop élevée pouvant entraîner sa destruction lors de son contact avec la gaine en sortie de l'outillage d'extrusion.

L'invention concerne également le procédé de fabrication de gaines plastiques contenant une âme, fragile à la température d'extrusion de la gaine, correspondant au préambule de la revendication indépendante 10. Cette âme peut être par exemple une poudre plastique, une ou plusieurs fibres plastiques, ou encore une ou plusieurs fibres métalliques, minérales ou organiques imprégnées ou enrobées de poudre plastique.

Cet appareillage et le procédé qui en découle s'appliquent particulièrement à la fabrication de matériaux composites constitués d'une âme en matière plastique renforcée ou non de fibres et revêtue d'une gaine thermoplastique dont le point de fusion est sensiblement voisin ou supérieur à la matière plastique de l'âme. La matière plastique de l'âme peut être une résine thermoplastique identique ou différente de celle de la gaine. Ce peut être également une poudre thermodurcissable non réticulée.

Il est connu de gainer des âmes métalliques par extrusion, ne serait-ce que pour fabriquer des fils électriques. Toutefois, comme on peut le constater par exemple dans le brevet US-A-3 764 642, les techniques connues ne peuvent permettre que de gainer des âmes résistant à la température de fusion du matériau de gainage. C'est pourquoi, aucun appareillage ne le permettant de façon satisfaisante, il n'a pu être possible de gainer en continu un matériau sensible à la température d'extrusion de la gaine.

Dans le brevet US-A-3 239 884, ayant servi de base pour le préambule des revendications indépendantes 1 et 10, un outillage permettant de gainer un câble sensible aux effets thermiques est décrit. L'appareillage, permettant de gainer un câble est constitué d'un outillage représenté par une filière tubulaire et un poinçon et d'un guide tubulaire du câble. Ce guide, muni d'un dispositif de refroidissement interne, est disposé dans l'axe de la lèvre de sortie de l'outillage formant la paroi interne de la gaine, tout en conservant un canal permettant la circulation d'air comprimé ou de provoquer une dépression entre le câble, le guide et la gaine, la jonction entre le câble et la gaine assurant l'étanchéité et la continuité entre la tubulure du guide et le canal.

Ce brevet US-A-3 239 884 montre aussi déjà un écran thermique en sortie de la buse, qui est refroidi.

Selon le brevet EP-A-0 133 825 il n'est possible d'obtenir qu'un matériau composite dont la température de fusion de l'âme est au mieux égale à celle de la gaine, c'est-à-dire un matériau possédant une âme non sensible à la température de gainage dans les conditions opératoires connues. L'âme elle-même est constituée d'une fibre avec de la poudre.

Selon cet appareillage, si un flux d'air est utilisé comme moyen de refroidissement, il vient directement en contact à la jonction du câble et de la gaine. L'arrivée directe du flux de refroidissement n'est pas gênant lorsqu'il s'agit d'un câble unique à gainer, il suffit de le régler de façon adéquate pour ne pas perturber le gainage.

Il en va tout autrement lorsqu'il s'agit de gainer une âme particulièrement fragile soit thermiquement soit mécaniquement, comme dans le cas par exemple du gainage de mèches de fibres excessivement fines et/ou de poudres. Dans le cas de l'appareillage selon ce brevet US-A-3 239 884 le réglage du débit d'air ne peut être assuré dans le cas du gainage de mèches de fibres ce qui entraîne des anomalies dans la formation de la gaine. Il en est de même dans le cas du gainage des poudres qui se trouvent refoulées soit dans le guide, soit dans le canal d'évacuation de l'air selon le sens du flux d'air, ce qui conduit fatalement à des bourrages à un endroit quelconque de l'appareillage entraînant au mieux la rupture du matériau extrudé et au pire la décomposition des matériaux par bouchage de la filière.

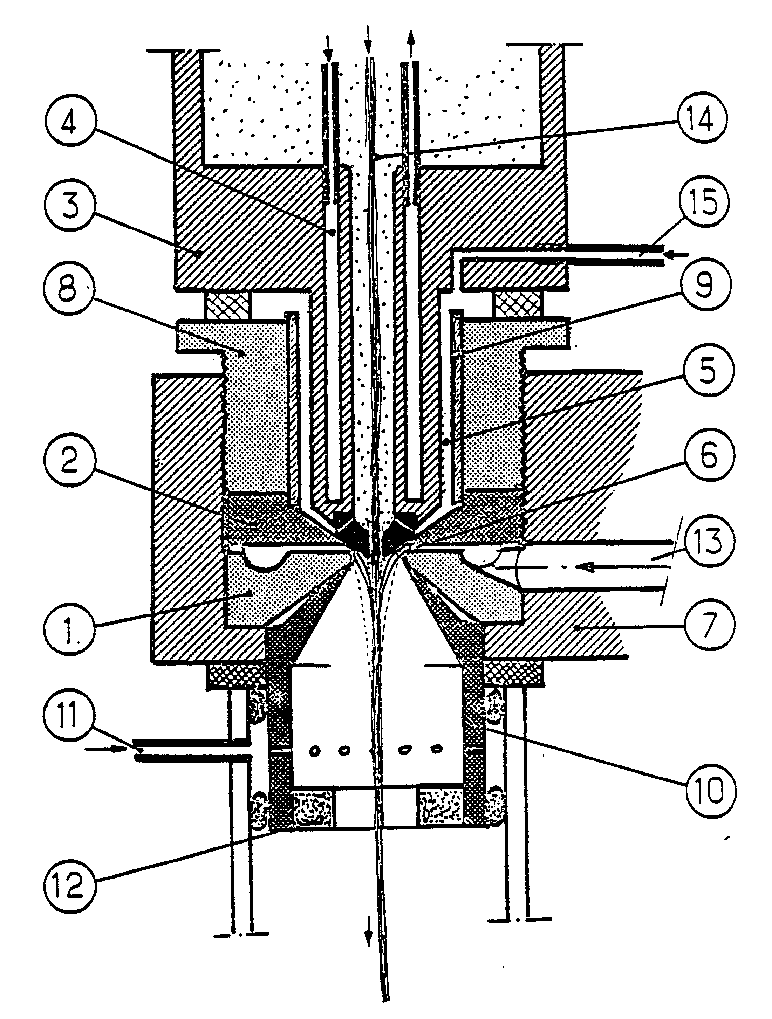

L'appareillage selon l'invention permet de remédier à ces inconvénients. D'autres avantages sont décrits aux revendications dépendantes. La description ci-après, appuyée sur la figure annexée explicite l'appareillage. Il est essentiellement constitué d'un outillage représenté par une filière tubulaire (1) et un poinçon (2) dont les sens respectifs peuvent éventuellement être inversés par rapport à ceux de la figure et d'un guide tubulaire (3) de l'âme. Ce guide, maintenu éventuellement refroidi au moyen du système (4), est disposé de telle sorte que son extrémité de sortie aboutisse sensiblement dans l'alignement, et de préférence sensiblement dans l'axe, de la lèvre de sortie de l'outillage formant la paroi interne de la gaine, c'est-à-dire sensiblement dans l'alignement du poinçon (2), tout en conservant un canal (5) pour un moyen de refroidissement pouvant aller jusqu'au canal (6) de sortie de la matière de l'outillage.

L'originalité de ce guide est d'être terminé en sortie d'une buse percée de trous latéraux. En outre, le canal de sortie de la buse, de préférence dans l'axe de celui du guide, est d'un diamètre, tout en restant supérieur à celui de l'âme traversant le guide, inférieur au diamètre interne du reste du guide (3). L'intérêt de cette buse, représentée sur la figure en noir en tête du guide (3), est de maîtriser le moyen de refroidissement, en général un courant d'air, arrivant par le canal (5). Ce moyen de refroidissement, partiellement ou totalement détourné par les trous latéraux de la buse, arrive avec moins de vigueur sur le matériau (14) constituant l'âme et sur la gaine formée dans le canal (6). Un tel agencement est particulièrement intéressant lorsque l'âme est constituée plus ou moins partiellement de poudre. En déplaçant le guide de façon à ce que l'extrémité de la buse vienne en contact avec le poinçon (2), il est possible d'obturer totalement, comme représenté sur la figure, le canal (5) avant la sortie de l'outillage formant la paroi interne de la gaine. Dans ce cas d'obturation totale le fluide de refroidissement, détourné par les trous latéraux de la buse, est renvoyé à l'intérieur du guide sans entrer directement en contact avec la gaine. Le nombre de trous latéraux est au moins au nombre de deux disposés en opposition ; toutefois pour la bonne marche de l'appareillage il est préférable de disposer une couronne de trous autour de la buse.

De façon classique et accessoire l'outillage représentant l'ensemble filière-poinçon est habituellement monté en tête d'équerre (7) l'ensemble étant fixé par un écrou de serrage (8). Afin d'améliorer l'isolation thermique du guide, il n'est pas exclu de revêtir les parois chaudes du passage (5) d'un isolant (9) servant d'écran thermique supplémentaire.

Afin de diminuer au maximum l'effet dû au rayonnement calorifique de l'outillage d'extrusion, il est recommandé de disposer directement en sortie d'outillage un écran thermique (10), les meilleurs résultats étant obtenus avec un écran prenant naissance au niveau de la lèvre externe de l'outillage. L'efficacité de l'écran peut être améliorée par tout moyen de refroidissement annexe tel, par exemple, l'envoi d'un courant d'air par la tubulure (11), courant d'air pouvant accessoirement servir pour maintenir une contre-pression sur le matériau extrudé grâce à un réducteur de débit d'air (12). L'ensemble de l'appareillage s'adapte à une extrudeuse classique et s'utilise selon les techniques classiques d'extrusion.

L'extrémité du guide tubulaire (3), c'est-à-dire l'extrémité de la buse, sensiblement dans l'alignement de la lèvre de sortie de l'outillage formant la paroi interne de la gaine, peut se trouver en deçà de ladite lèvre, mais elle peut également déboucher au-delà de la lèvre de sortie de la filière comme montré sur la figure. De préférence la distance de l'extrémité de la sortie de la buse à la lèvre du poinçon quand le guide est en retrait, ou, de l'extrémité de sortie de la buse à la lèvre de sortie de la filière quand le guide dépasse à l'extérieur de la filière est de l'ordre de 4 mm au maximum.

Au moyen de l'appareillage il est possible de fabriquer, comme déjà précisé, un matériau composite constitué d'une gaine plastique contenant une âme fragile à la température d'extrusion de la gaine. Selon le procédé on extrude une gaine thermoplastique au travers du canal (13) de la filière, tandis que simultanément par l'extrémité opposée à l'outillage du guide (3), éventuellement refroidi et servant d'entonnoir, on introduit le matériau (14) constituant l'âme qui rencontre la gaine après la sortie de l'outillage, un système de refroidissement étant établi sensiblement au niveau de la sortie de l'outillage entre la partie interne de la gaine et le matériau constituant l'âme de telle sorte que l'âme ne puisse être attaquée par la température de l'outillage ou celle de la gaine en sortie (6). Un système de refroidissement pratique, bien que non exhaustif, consiste à injecter de l'air froid en (15) dans le canal (5) entre le guide (3) et la paroi chaude de l'outillage. En conséquence soit de l'avancement du guide dans la sortie de l'outillage, soit du degré de refroidissement de la sortie interne de la gaine, ou encore de la conjonction des deux moyens, il est possible de maintenir l'ensemble du matériau à gainer à une température suffisamment basse pour qu'il conserve durant toute l'opération de gainage son aspect pratiquement original sans déformation sensible.

Afin d'améliorer le calibrage du matériau composite ou même d'augmenter sa vitesse de refroidissement il est possible d'envoyer un contre-courant d'air sur la gaine externe en sortie d'outillage. Cela peut par exemple se faire en injectant de l'air dans la tubulure (11) de l'écran thermique (10).

Selon la technique considérée toutes les résines thermoplastiques extrudables peuvent servir de gaine. Elles peuvent par exemple être choisies dans le groupe des polymères ou copolymères styréniques, vinyliques, acryliques ou méthacryliques, oléfiniques, ou encore parmi les résines fluorées, les polyamides, les polycarbonates, les propionates de cellulose et les mélanges de ces composés.

Les matériaux utilisés pour l'âme peuvent être choisis parmi les résines thermoplastiques pouvant servir à la fabrication de la gaine. Ils peuvent également être choisis parmi toutes les poudres ou fibres susceptibles d'avoir leur aspect physique ou leur structure endommagé aux températures d'extrusion de la gaine. Il peut par exemple s'agir de poudre de résine thermodurcissable non réticulée telle qu'une poudre de polyester non réticulé.

L'âme peut être gainée directement sous forme de poudre, mais aussi sous forme de fibre ou de granulé. Un autre aspect de l'invention concerne le gainage de fibres quelconques imprégnées de poudres de résine plastique ou possédant une réactivité quelconque.

On peut ainsi par exemple gainer des fibres organiques ou inorganiques telles que fibres textiles, de carbone, de verre ou autres. Ces fibres imprégnées de poudres de résine plastique sont connues et peuvent, selon un procédé classique, être obtenues par passage de fibres dans un lit fluidisé de poudre comme décrit dans le brevet EP-A-0 133 825. Dans le cas du gainage des structures de résine plastique et de fibres imprégnées ou non de poudre de résine plastique on introduit dans la tubulure du guide la structure ou les fibres imprégnées (14) qui rencontrent la gaine en sortie de filière après avoir été préalablement isolées de cette gaine par un moyen de refroidissement (5). En général le refroidissement est établi au moyen d'un courant d'air entre l'âme et la paroi interne de la gaine.

Les exemples suivants illustrent l'invention sans toutefois la limiter.

Exemple 1

A partir d'une extrudeuse type monivis de diamètre 30-24 D, munie de l'outillage de la figure annexée, on extrude à un débit de 760 grammes/heure, à une température d'extrusion à l'outillage de 220 °C, une gaine de polyamide 6 de diamètre 2 mm, simultanément on introduit dans la gaine à travers le guide (3) refroidi à l'eau, un rowing 320 tex dont les fils sont préalablement noyés dans une poudre de polyamide 12 de température de fusion de 176 °C, dont la taille des particules est de l'ordre de 10 microns.

Le rapport en volume fibre/poudre étant de 25/75. Dans le canal (5) on fait circuler un débit d'air suffisant pour obtenir une fluidisation de la poudre à proximité de la zone de gainage.

Exemple 2

Dans l'appareillage de l'exemple 1 on extrude à un débit de 860 grammes/heure à une température d'extrusion à l'outillage de 225 °C une gaine polyamide 6 de diamètre 2 mm, simultanément on introduit dans la gaine à travers le guide 3 refroidi à l'eau un agent d'expansion en poudre : l'azodicarbonamide dont la température de décomposition est de 150 °C, imprégné sur un rowing 320 tex. Le rapport en volume fibre-poudre est de 46/54.

On obtient un composite polyamide 6-azodicarbonamide renforcé de fibres susceptibles d'être traité ultérieurement à chaud pour utiliser les effets d'expansion de l'azodicarbonamide.

Exemple 3

On reprend l'exemple 1 avec :
une température d'outillage de 225 °C
une gaine de polyéthylène de point de fusion 117 °C
un débit d'extrusion de 1 025 grammes/heure.

On introduit dans la gaine, simultanément à sa formation, le rowing imprégné de peroxyde de dicumyle en poudre dont la température de réaction est de 120 °C. Le rapport en volume fibre-poudre est de 35/65.

On obtient un composite susceptible d'être réticulé ultérieurement à chaud.

Exemple 4

On reprend l'exemple 1 avec :
une température d'outillage de 210 °C
une gaine de polyamide 12
un débit d'extrusion de 800 grammes/heure.

On introduit dans la gaine, simultanément à sa formation, le rowing imprégné de polyéther bloc amide en poudre de point de fusion de 128 °C. Le rapport en volume fibre-poudre est de 43/57.

On obtient un composite susceptible d'être traité à chaud afin d'améliorer la souplesse finale du polyamide 12 grâce au polyéther compatible.

Exemple 5

On reprend l'exemple 4 en remplaçant le polyéther bloc amide par une poudre de polyamide 12.

On obtient une gaine de polyamide 12 contenant les fibres de verre imprégnées de poudre de polyamide 12 susceptible d'être transformée ultérieurement en produit fini renforcé de fibres de verres.

**Revendications**

1. Dispositif, pour extrudeuse, de gainage d'une âme sensible à la température d'extrusion du matériau de gainage constitué essentiellement d'un outillage, comprenant une filière tubulaire (1) et un poinçon (2), et d'un guide tubulaire (3), possédant éventuellement un moyen de refroidissement (4), disposé de telle sorte que son extrémité aboutisse sensiblement dans l'alignement de la lèvre de sortie de l'outillage formant la paroi interne de la gaine, tout en conservant un canal (5) pour un moyen de refroidissement entre ledit guide et l'outillage pouvant aller jusqu'au canal (6) de sortie de la matière de l'outillage caractérisé en ce que l'extrémité du guide est terminée par une buse percée de trous latéraux.

2. Dispositif selon la revendication 1 caractérisé en ce que le canal de sortie de la buse est d'un diamètre inférieur au diamètre interne du reste du guide (3).

3. Dispositif selon l'une des revendications 1 à 2 caractérisé en ce que l'extrémité de la buse se trouve sensiblement dans l'alignement de la lèvre de sortie de l'outillage formant la paroi interne de la gaine.

4. Dispositif selon l'une des revendications 1 à 2 caractérisé en ce que la buse est sensiblement dans l'axe de la lèvre de sortie de l'outillage formant la paroi interne de la gaine.

5. Dispositif selon l'une des revendications 1 à 4 caractérisé en ce que l'extrémité de la buse est en contact avec le poinçon (2).

6. Dispositif selon l'une des revendications 1 à 5 caractérisé en ce que la distance de l'extrémité de la sortie de la buse à la lèvre du poinçon (2) quand le guide est en retrait, ou, de l'extrémité de la sortie de la buse à la lèvre de la sortie de la filière (1) quand le guide dépasse à l'extérieur de la filière est d'environ 4 mm maximum.

7. Dispositif selon l'une des revendications 1 à 6 caractérisé en ce qu'est disposé en sortie d'outillage un écran thermique (10).

8. Dispositif selon la revendication 7 caractérisé en ce que l'écran thermique prend naissance au niveau de la lèvre externe de l'outillage.

9. Dispositif selon l'une des revendications 7 à 8 caractérisé en ce que l'écran thermique dispose d'un moyen de refroidissement.

10. Procédé de fabrication d'un matériau composite par extrusion d'une gaine autour d'une âme consistant à faire passer le matériau formant l'âme à travers un guide, éventuellement refroidi, ledit matériau constituant l'âme, et, éventuellement, la paroi interne de la gaine au niveau de la sortie de l'outillage, avant leur contact, étant refroidi au moyen d'un système de refroidissement situé entre l'outillage et le guide caractérisé en ce que pour protéger l'âme sensible à la température d'extrusion de la gaine le guide possède en son extrémité une buse percée de trous latéraux permettant de canaliser le flux de refroidissement au moins partiellement vers l'intérieur du guide.

11. Procédé selon la revendication 10 caractérisé en ce que l'extrémité de la buse étant en contact avec le poinçon (2) le flux de refroidissement ne peut agir directement sur la gaine en sortie d'appareillage.

12. Procédé selon l'une des revendications 10 à 11 caractérisé en ce que l'extrémité de la buse aboutit au minimum dans l'alignement de la lèvre de sortie de l'outillage d'extrusion formant la paroi interne de la gaine.

13. Procédé selon l'une des revendication 9 à 12 caractérisé en ce que la buse est sensiblement dans l'axe de la lèvre de sortie de l'outillage formant la paroi interne de la gaine.

14. Procédé selon l'une des revendications 9 à 13 caractérisé en ce que le matériau composant la gaine est choisi parmi les résines thermoplastiques.

15. Procédé selon l'une des revendications 9 à 14 caractérisé en ce que l'âme du matériau composite est choisi parmi les résines plastiques sous forme de poudre, de fibres ou de granulés, et, les fibres imprégnées de poudre de résine plastique.

16. Procédé selon la revendication 15 caractérisé en ce que les résines plastiques sont choisies parmi les résines thermoplastiques ou thermodurcissables non réticulées.

17. Procédé selon l'une des revendications 15 à 16 caractérisé en ce que les fibres imprégnées de poudre de résine plastique sont choisies parmi les fibres de verre et de carbone.

18. Application du dispositif et du procédé des revendications 1 à 17 à la fabrication de fibres imprégnées de poudres de résines plastiques sensibles à la température d'extrusion de la gaine et gainées par une résine thermoplastique.

## Claims

1. A device for an extruder for sheathing a core sensitive to the temperature of extrusion of the sheathing material consisting substantially of a tool comprising a tubular extrusion plate (1), an extrusion die (2) and a tubular guide (3), having a means (4) providing the possibility of cooling arranged so that its end abuts substantially in alignment with the outlet mouth of the tool forming the internal wall of the sheath, whilst leaving a channel (5) for a cooling medium between the said guide and the tool, which may reach as far as the outlet channel (6) of the material in the tool, characterized in that the end of the guide is terminated by a nozzle pierced by lateral holes.

2. A device according to Claim 1, characterized in that the exit channel of the nozzle has a smaller diameter than the internal diameter of the remainder of the guide (3).

3. A device according to one of Claims 1 to 2, characterized in that the end of the nozzle is substantially in alignment with the outlet mouth of the tool forming the internal wall of the sheath.

4. A device according to one of Claims 1 to 2, characterized in that the nozzle is substantially on the same axis as the outlet mouth of the tool forming the internal wall of the sheath.

5. A device according to one of Claims 1 to 4, characterized in that the end of the nozzle is in contact with the die (2).

6. A device according to one of Claims 1 to 5, characterized in that the distance from the end of the outlet of the nozzle to the mouth of the die (2) when the guide is recessed, or, the distance from the end of the outlet from the nozzle to the outlet mouth of the extrusion plate (1), when the guide extends beyond the extrusion plate, is at most about 4 mm.

7. A device according to one of Claims 1 to 6, characterized in that a thermal screen (10) is situated at the outlet of the tool.

8. A device according to Claim 7, characterized in that the thermal screen starts at the same level as the external mouth of the tool.

9. A device according to one of Claims 7 to 8, characterized in that the thermal screen has a means of cooling.

10. A process for making a composite material by extrusion of a sheath around a core which consists of making the material forming the core pass through a guide, optionally cooled, the said material constituting the core and, optionally, the internal wall of the sheath in the region of the outlet from the tool, being cooled, before their contact, by means of a cooling system situated between the tool and the guide, characterized in that in order to protect the core which is sensitive to the sheath extrusion temperature, the guide has at its end a nozzle pierced by lateral holes enabling the cooling flow to be at least partly channelled towards the interior of the guide.

11. A process according to Claim 10, characterized in that the end of the nozzle being in contact with the die (2), the cooling flow can not act directly on the sheath as it leaves the apparatus.

12. A process according to one of Claims 10 to 11, characterized in that the end of the nozzle projects to a minimum extent in the alignment of the outlet mouth of the tool forming the internal wall of the sheath.

13. A process according to one of Claims 9 to 12, characterized in that the nozzle is substantially on the same axis as the outlet mouth of the tool forming the internal wall of the sheath.

14. A process according to one of Claims 9 to 13, characterized in that the material forming the sheath is chosen from the group of thermoplastic resins.

15. A process according to one of Claims 9 to 14, characterized in that the core of the composite material is chosen from the group of plastic resins in the form of a powder, fibres, or granules, or from fibres impregnated with plastic resin powder.

16. A process according to Claim 15, characterized in that the plastic resins are chosen from the group of thermoplastic or thermosetting resins which are not cross-linked.

17. A process according to one of Claims 15 to 16, characterized in that the fibres impregnated with plastic resin powder are chosen from glass fibres or carbon fibres.

18. Use of the device and the process of Claims 1 to 17, for the manufacture of fibres impregnated with plastic resin powder sensitive to the temperature of extrusion of the sheath and sheathed by a thermoplastic resin.

**Patentansprüche**

1. Vorrichtung für einen Extruder zum Einhüllen einer gegen die Extrusionstemperatur des Hüllenmaterials empfindlichen Seele, im wesentlichen bestehend aus einem Werkzeug, das aus einer Rohrdüse (1) und einem Durchschlag (2) besteht, und aus einer rohrförmigen Führung (3), die eventuell ein Mittel zur Abkühlung (4) aufweist und so angeordnet ist, daß seine Spitze ungefähr auf die Fluchtlinie der die Innenwand der Hülle formenden Austrittslippe des Werkzeugs unter Ausbildung eines Kanals (5) für ein Kühlmittel zwischen der genannten Führung und dem Werkzeug, der bis zum Materialaustrittskanal (6) des Werkzeugs reichen kann, trifft, dadurch gekennzeichnet, daß die Spitze der Führung in einer seitlich durchlöcherten Düse endet.

2. Vorrichtung nach Patentanspruch 1, dadurch gekennzeichnet, daß der Austrittskanal der Düse einen kleineren Durchmesser hat, als der Rest der Führung (3).

3. Vorrichtung nach einem der Patentansprüche 1 bis 2, dadurch gekennzeichnet, daß sich die Spitze der Düse ungefähr auf der Fluchtlinie der die Innenwand der Hülle formenden Austrittslippe des Werkzeugs befindet.

4. Vorrichtung nach einem der Patentansprüche 1 bis 2, dadurch gekennzeichnet, daß die Düse ungefähr in der Achse der die Innenwand der Hülle formenden Austrittslippe des Werkzeugs liegt.

5. Vorrichtung nach einem der Patentansprüche 1 bis 4, dadurch gekennzeichnet, daß die Spitze der Düse den Durchschlag (2) berührt.

6. Vorrichtung nach einem der Patentansprüche 1 bis 5, dadurch gekennzeichnet, daß der Abstand zwischen dem Austrittsende der Düse und der Lippe des Durchschlags (2) bei zurückgezogener Führung, oder zwischen dem Austrittsende der Düse und der Austrittslippe der Rohrdüse (1), wenn die Führung ins Äußere der Rohrdüse vorsteht, maximal ungefähr 4 mm beträgt.

7. Vorrichtung nach einem der Patentansprüche 1 bis 6, dadurch gekennzeichnet, daß am Austritt des Werkzeugs ein Wärmeschild angeordnet ist.

8. Vorrichtung nach Patentanspruch 7, dadurch gekennzeichnet, daß der Wärmeschild auf der Höhe der Austrittslippe des Werkzeugs beginnt.

9. Vorrichtung nach einem der Patentansprüche 7 bis 8, dadurch gekennzeichnet, daß der Wärmeschild über ein Abkühlungsmittel verfügt.

10. Verfahren zur Herstellung eines Verbundwerkstoffes durch Extrusion einer Hülle um eine Seele, darin bestehend, daß das die Seele bildende Material durch eine eventuell abgekühlte Führung geleitet wird, wobei das die Seele bildende Material und eventuell die Innenwand der Hülle auf der Höhe des Austritts des Werkzeugs, bevor sie miteinander in Berührung kommen, durch eine zwischen dem Werkzeug und der Führung angeordnete Kühlvorrichtung abgekühlt werden, dadurch gekennzeichnet, daß die Führung zum Schutz der gegen die Extrusionstemperatur der Hülle empfindlichen Seele an ihrem Ende eine seitlich durchlöcherte Düse aufweist, die es ermöglicht, die Kühlströmung mindestens teilweise ins Innere der Führung zu leiten.

11. Verfahren nach Patentanspruch 10, dadurch gekennzeichnet, daß bei Berührung des Düsenendes mit dem Durchschlag (2) die Kühlströmung nicht direkt auf die aus der Vorrichtung austretende Hülle einwirken kann.

12. Verfahren nach einem der Patentansprüche 10 bis 11, dadurch gekennzeichnet, daß das Düsenende mindestens bis zur Fluchtlinie der die Innenwand der Hülle formenden Austrittslippe des Werkzeugs reicht.

13. Verfahren nach einem der Patentansprüche 9 bis 12, dadurch gekennzeichnet, daß die Düse ungefähr in der Achse der die Innenwand der Hülle formenden Austrittslippe der Werkzeugs liegt.

14. Verfahren nach einem der Patentansprüche 9 bis 13, dadurch gekennzeichnet, daß das die Hülle bildende Material ein thermoplastisches Harz ist.

15. Verfahren nach einem der Patentansprüche 9 bis 14, dadurch gekennzeichnet, daß die Seele des Verbundwerkstoffs ein Kunstharz in Form von Pulver, Fasern oder Granulat oder mit Kunstharzpulver imprägnierte Fasern sind.

16. Verfahren nach Patentanspruch 15, daduch gekennzeichnet, daß die Kunstharze nicht vernetzte thermoplastische oder duroplastische Harze sind.

17. Verfahren nach einem der Patentansprüche 15 bis 16, dadurch gekennzeichnet, daß die mit Kunstharzpulver imprägnierten Fasern Glas- oder Carbonfasern sind.

18. Anwendung der Vorrichtung und des Verfahrens der Patentansprüche 1 bis 17 zur Herstellung von mit Pulvern von gegen die Extrusionstemperatur der Hülle empfindlichen Kunstharzen imprägnierten und mit einem thermoplastischen Harz umhüllten Fasern.

0 188 939